# EUROPÄISCHE PATENTSCHRIFT

(11) **EP 4 177 132 B1**
(45) Veröffentlichungstag und Bekanntmachung des Hinweises auf die Patenterteilung: **24.09.2025**
(21) Anmeldenummer: 22204622.9
(22) Anmeldetag: 31.10.2022
(51) Int. Cl.: B62D 1/181

(54) **VERSTELLANTRIEB FÜR EINE MOTORISCH VERSTELLBARE LENKSÄULE UND LENKSÄULE FÜR EIN KRAFTFAHRZEUG**
ADJUSTMENT DRIVE FOR A MOTOR-DRIVEN ADJUSTABLE STEERING COLUMN AND STEERING COLUMN FOR A MOTOR VEHICLE
ENTRAÎNEMENT DE RÉGLAGE POUR UNE COLONNE DE DIRECTION RÉGLABLE PAR MOTEUR ET COLONNE DE DIRECTION POUR UN VÉHICULE AUTOMOBILE

(30) Priorität: 08.11.2021 DE 102021212522
(43) Veröffentlichungstag der Anmeldung: 10.05.2023
(73) Patentinhaber: thyssenkrupp Presta Aktiengesellschaft, 9492 Eschen (LI); thyssenkrupp AG, 45143 Essen (DE)
(72) Erfinder: Huber, Sebastian, 6811 Göfis (AT); Specht, Jean-Pierre, 9469 Haag (CH)
(74) Vertreter: thyssenkrupp Intellectual Property GmbH

(56) Entgegenhaltungen:
- GB-A- 2 304 865
- JP-A- 2002 002 500

## Beschreibung

### Stand der Technik

Die Erfindung betrifft einen Verstellantrieb für eine motorisch verstellbare Lenksäule für ein Kraftfahrzeug, umfassend eine Spindeleinheit mit einer in eine Spindelmutter eingreifenden Gewindespindel mit einer Spindelachse, und eine Antriebseinheit mit einem von einem elektrischen Motor um eine Antriebsachse drehend antreibbaren Antriebsrad, welches als Riemenrad ausgebildet ist, wobei ein mit dem Antriebsrad über einen umlaufenden Riemen antriebsmäßig gekuppeltes Getrieberad mit der Spindelmutter oder der Gewindespindel verbunden ist, wobei zwischen der Antriebseinheit und der Spindeleinheit eine Vorspanneinrichtung angeordnet ist. Eine Lenksäule mit einem derartigen Verstellantrieb ist ebenfalls Gegenstand der Erfindung.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Manteleinheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit in Höhenrichtung schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Motor umfasst, der mit einem Spindeltrieb verbunden ist, der eine Spindeleinheit mit einer in eine Spindelmutter eingeschraubten Gewindespindel umfasst, die sich in Richtung einer Spindelachse erstreckt. Durch die Antriebseinheit sind die Gewindespindel und die Spindelmutter gegeneinander um die Spindelachse drehend antreibbar, wodurch die Gewindespindel und die Spindelmutter je nach Drehrichtung translatorisch aufeinander zu oder voneinander wegbewegt werden können. In einer Ausführungsform ist die Gewindespindel von der Antriebseinheit, die feststehend mit der Stelleinheit oder der Trageinheit verbunden ist, drehend antreibbar und greift in die Spindelmutter ein, die an der Trageinheit oder alternativ an der Stelleinheit bezüglich Drehung um die Gewindespindelachse feststehend angebracht ist. In Richtung der Gewindespindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Gewindespindelachse bewirkt. Diese Ausführung wird daher auch als Rotationsspindelantrieb bezeichnet.

In einer alternativen Ausführungsform ist die Gewindespindel bezüglich Drehung um ihre Gewindespindelachse unverdrehbar mit der Trageinheit oder alternativ mit der Stelleinheit gekoppelt und die Spindelmutter ist drehbar, aber in Richtung der Gewindespindelachse feststehend entsprechend an der Stelleinheit oder alternativ an der Trageinheit gelagert. Wie in der ersten Ausführungsform stützt sich in Richtung der Gewindespindelachse die Gewindespindel an der Trageinheit oder an der Stelleinheit ab, und die Spindelmutter entsprechend an der Stelleinheit oder an der Trageinheit, so dass die Gewindespindel in Richtung der Gewindespindelachse translatorisch verschiebbar ist, indem die Spindelmutter von der Antriebseinheit drehend angetrieben wird. Diese Ausführung wird als Tauchspindelantrieb bezeichnet.

Durch den rotatorischen Antrieb der Gewindespindel wird wie bei der erstgenannten Ausführung eine translatorische Verstellung von Trageinheit und Stelleinheit relativ zueinander in Richtung der Gewindespindelachse bewirkt. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann.

Bei einem Verstellantrieb der eingangs genannten Art erfolgt der Antrieb des Spindeltriebs über einen Riementrieb, bei dem von dem Motor ein als Riemenrad ausgebildetes Antriebsrad um eine Antriebsachse drehend antreibbar ist, das über einen umlaufenden Riemen mit einem ebenfalls als Riemenrad ausgebildeten, um die Spindelachse drehbaren Getrieberad antriebsmäßig gekoppelt ist, welches je nach Ausführung des Spindeltriebs mit der Spindelmutter oder mit der Gewindespindel drehfest verbunden ist. Ein derartiger riemengetriebener Verstellantrieb ist beispielsweise aus der DE 10 2017 218 894 A1 bekannt. Ein Vorteil dieses Riementriebs ist die hohe Laufruhe und das relativ geringe Gewicht. Durch Toleranzen bei der Montage und im Betrieb kann jedoch die Riemenspannung variieren, was zu Antriebsschlupf und Laufgeräuschen führen kann.

Ein Verstellantrieb der eingangs genannten Art ist aus der JP 2002 002500 A bekannt. Angesichts der vorangehend erläuterten Problematik ist es eine Aufgabe der vorliegenden Erfindung, ein verbessertes Betriebsverhalten des Verstellantriebs zu ermöglichen.

### Darstellung der Erfindung

Diese Aufgabe wird erfindungsgemäß gelöst durch den Verstellantrieb gemäß Anspruch 1 und die Lenksäule gemäß Anspruch 11. Vorteilhafte Weiterbildungen ergeben sich aus den Unteransprüchen.

Bei einem Verstellantrieb für eine motorisch verstellbare Lenksäule für ein Kraftfahrzeug, umfassend eine Spindeleinheit mit einer in eine Spindelmutter eingreifenden Gewindespindel mit einer Spindelachse, und eine Antriebseinheit mit einem von einem elektrischen Motor um eine Antriebsachse drehend antreibbaren Antriebsrad, welches als Riemenrad ausgebildet ist, wobei ein mit dem Antriebsrad über einen umlaufenden Riemen antriebsmäßig gekuppeltes Getrieberad mit der Spindelmutter oder der Gewindespindel verbunden ist, wobei zwischen der Antriebseinheit und der Spindeleinheit eine Vorspanneinrichtung angeordnet ist, ist erfindungsgemäß vorgesehen, dass die Antriebseinheit relativ zur Spindeleinheit in einer Führungseinrichtung bewegbar gelagert ist.

Die erfindungsgemäße Vorspanneinrichtung bildet eine Riemenspanneinrichtung, die mit der Antriebseinheit und der Spindeleinheit zusammenwirkt, um eine Vorspannkraft auszuüben und dadurch eine definierte Riemenspannung auf den Riemen aufzubringen. Dadurch kann die Riemenspannung weitgehend unabhängig von Bauteil- und Montagetoleranzen und Änderungen der Betriebsbedingungen über die gesamte Lebensdauer innerhalb eines optimalen Bereichs vorgegeben und gehalten werden. Entsprechend kann in vorteilhafter Weise die Laufruhe erhöht und die Betriebssicherheit verbessert werden.

Erfindungsgemäß ist die Antriebseinheit relativ zur Spindeleinheit in einer Führungseinrichtung bewegbar gelagert ist. Die Antriebseinheit ist in der Führungseinrichtung bevorzugt in Richtung der Vorspannkraft relativ zur Spindeleinheit verlagerbar gehalten und geführt, bevorzugt in Richtung der zwischen Antriebsrad und Getrieberad verlaufenden Riementrume.

Bevorzugt ist die Führungseinrichtung als Zwangsführung mit einem Bewegungs-Freiheitsgrad ausgestaltet, so dass durch die Führung ausschließlich der Abstand zwischen Antriebsrad und Getrieberad quer zu Antriebs- und Spindelachse zur Einstellung der Riemenspannung veränderbar ist, jedoch keine axiale Verlagerung oder Verkippung zugelassen sind, welche die Funktion des Riementriebs beeinträchtigen könnten. Dadurch können in vorteilhafter Weise die Laufruhe erhöht und Verschleiß reduziert werden.

Es ist vorteilhaft, dass die Führungseinrichtung ausgebildet ist, um eine geführte Verlagerung eines Antriebsgehäuses relativ zu einem Spindelgehäuse zu ermöglichen. Ein Vorteil ist, dass diese beiden Gehäuse, wie vorangehend erläutert, einen modulartigen Aufbau ermöglichen können. Es ist zur Realisierung der Erfindung konstruktiv vorteilhaft, dass die Gehäuse definiert und ausschließlich in Richtung der durch die Führung vorgegebenen Richtung relativ zueinander bewegt werden können. Dies ermöglicht den Einsatz einfacher und kostengünstiger Vorspann- oder Federelemente, ohne besondere Anforderungen an definierte räumliche Steifigkeit.

Ein weiterer Vorteil ist, dass durch die Führungseinrichtung die relative Verlagerung von Antriebs- und Getrieberad durch die Länge der Führung begrenzt werden kann.

Ein weiterer Vorteil ist, dass die Montage vereinfacht werden kann, und die funktionalen Anforderungen an den Riementrieb geringer ausfallen können, so dass beispielsweise ein einfacher Flach- oder Keilriemen eingesetzt werden kann, ohne dass unerwünschter Antriebsschlupf durch zu geringe Riemenspannung auftritt.

Es ist vorteilhaft, dass die Vorspanneinrichtung ausgebildet ist, um die Antriebseinheit mit einer Vorspannkraft von der Spindeleinheit weg zu drängen. Die Vorspannkraft weist eine Krafterzeugungseinrichtung auf, welche die Vorspannkraft zwischen Antriebseinheit und Spindeleinheit einkoppelt, so dass das Antriebsrad und das Getrieberad in Richtung der dazwischen verlaufenden Riementrume voneinander weg gerichtet mit der Vorspannkraft belastet werden, so dass der Riemen entsprechend gespannt wird. Somit kann die Vorspannkraft direkt und ohne zusätzliche Spannmittel als Riemenspannung wirken. Vorteilhaft sind ein einfacher und kompakter Aufbau, ein geringer Montageaufwand und eine hohe Funktions- und Betriebssicherheit.

Die Vorspannkraft ist bevorzugt von der Spindelachse auf die Antriebsachse zu gerichtet, bevorzugt senkrecht zu den beiden Achsen.

Es kann vorgesehen sein, dass die Spindeleinheit ein Spindelgehäuse aufweist, in dem das Getrieberad drehbar gelagert ist, und die Antriebseinheit ein Antriebsgehäuse aufweist, in dem das Antriebsrad drehbar gelagert ist. Das Spindelgehäuse dient - je nachdem ob ein Tauspindeltrieb oder ein Rotationsspindeltrieb gebildet ist - zur drehbaren Lagerung des mit der Spindelmutter oder der Gewindespindel drehfest verbundenen Getrieberads um die Spindelachse, und gleichzeitig zur axialen Abstützung des Getrieberads in Richtung der Spindelachse. Bevorzugt kann das Spindelgehäuse antriebsseitig an der Lenksäule fixiert sein, und die relativ dazu durch den Spindeltrieb axial linear verstellbare Gewindespindel oder Spindelmutter an einem von dem Verstellantrieb verstellbaren, antriebsfernen Bauteil der Lenksäule. Entsprechend kann das Spindelgehäuse bevorzugt Befestigungsmittel zur Anbringung an der Lenksäule aufweisen.

Das Antriebsgehäuse dient zur Lagerung des Antriebsrads um die Antriebsachse, die vorzugsweise parallel zur Spindelachse liegt, und ist in Achsrichtung der Spindelachse relativ zum Spindelgehäuse fixiert. Der elektrische Motor kann mit dem Antriebsgehäuse verbunden sein, so dass die Motorwelle drehschlüssig mit dem Antriebsrad gekuppelt ist. Dabei kann der Motor direkt axial angeflanscht sein, und das Antriebsrad kann direkt mit der Motorwelle verbunden sein. Es ist auch möglich, dass in dem Antriebsgehäuse ein zwischen Motor und Antriebsrad eingegliedertes Getriebe untergebracht ist. Durch die beiden Gehäuse kann ein modulartiger Aufbau realisiert werden, bei dem das Antriebsgehäuse eine Art eingangs- oder motorseitig des Riementriebs angeordnetes Antriebsmodul bildet, und das Spindelgehäuse entsprechend ein abtriebs- oder spindelseitiges Abtriebsmodul. Diese funktionale Aufteilung ist günstig für die Realisierung einer erfindungsgemäßen Vorspanneinrichtung.

Es kann vorzugsweise vorgesehen sein, dass die Vorspanneinrichtung ein zwischen der Antriebseinheit und der Spindeleinheit wirkungsmäßig angeordnetes Vorspannelement aufweist. Als Vorspannelement kann ein Krafterzeugungs- oder Kraftspeicherelement zwischen Antriebseinheit und Spindeleinheit eingesetzt sein, welches eine Vorspannkraft definiert vorgibt, welche das Antriebsrad und das Getrieberad auseinander drängt. Mit anderen Worten ist die Vorspannkraft auf eine Vergrößerung des Abstands zwischen Antriebs- und Getrieberad gerichtet, um den Riemen zu spannen. Ein derartiges Vorspannelement kann mit geringem Aufwand mit den erforderlichen Spezifikationen bezüglich der Vorspannkraft bereitgestellt und montiert werden. Vorteilhaft ist dabei, dass die Vorspannkraft und damit die Riemenspannung ohne externe Energiezufuhr oder Betätigung konstant und dauerhaft aufrechterhalten werden kann.

Das Vorspannelement kann bevorzugt ein elastisches Mittel aufweisen oder als solches ausgebildet sein, welches mechanisch vorspannbar ist zur Erzeugung einer elastischen Vorspannkraft. Vorzugsweise kann das Vorspannelement zwischen einem Antriebsgehäuse und einem Spindelgehäuse angeordnet sein, um diese mit der Vorspannkraft auseinander zu drängen.

Es kann vorgesehen sein, dass die Vorspanneinrichtung ein Federelement aufweist.

Ein Federelement bildet ein federelastisches Vorspannelement, dass durch seine Federkraft eine elastische Vorspannkraft erzeugen kann. Es kann mit geringem Aufwand, leicht und kostengünstig als metallische Druck-, Zug- oder Biegefeder bereitgestellt werden. Es kann konstruktiv einfach eingesetzt und derart abgestützt werden, so dass seine durch eine vorgegebene mechanische Spannung eingestellte Federkraft als Vorspannkraft zwischen der Spindeleinheit und der Antriebseinheit wirkt.

Es kann mit Vorteil vorgesehen sein, dass die Führungseinrichtung eine Schiebeführung aufweist. Die Schiebeführung kann beispielsweise eine Gleitführung umfassen, die eine lineare Verlagerung in Richtung der Vorspannkraft ermöglicht. Eine Verlagerung ist nur in der vorgegebenen Führungsrichtung möglich, die auch als Verschieberichtung bezeichnet wird. Die Schiebeführung kann bevorzugt zwischen einem Spindelgehäuse der Spindeleinheit, und einem Antriebsgehäuse der Antriebseinheit ausgebildet sein. Das Vorspannelement kann die Vorspannkraft entsprechend nur in der durch die Schiebeführung vorgegebenen Führungsrichtung ausüben, in der die Antriebseinheit und die Spindeleinheit auseinander gedrängt werden. Eine Schiebeführung hat den Vorteil, dass sie konstruktiv einfach und zuverlässig durch formschlüssig ineinander greifende Führungselemente bereitgestellt werden kann, die nur in einem durch die Führungsrichtung definierten Freiheitsgrad relativ zueinander bewegbar sind, und dabei in den anderen Richtungen zumindest teilweise formschlüssig gehalten sind. Eine Gleitführung kann beispielsweise durch ein Gleitstück gebildet werden, welches in einer korrespondierenden Führungsnut oder dergleichen entlang gleiten kann.

Es ist möglich, dass die Führungseinrichtung ein Gelenk aufweist. Das Gelenk ist zur Bildung einer Gelenkführung derart zwischen der Antriebseinheit und der Spindeleinheit angeordnet, dass die Antriebseinheit um eine Gelenkachse des Gelenks relativ zur Spindeleinheit verschwenkbar gelagert ist, und dadurch zur Vergrößerung des Abstands von der Spindeleinheit weg geschwenkt werden kann, also in Richtung der Vorspannkraft bewegbar ist. Die Gelenkachse kann bevorzugt im Wesentlichen parallel zur Spindelachse bzw. Antriebsachse angeordnet sein. Vorzugsweise kann das Gelenk zwischen einem Spindelgehäuse der Spindeleinheit, und einem Antriebsgehäuse der Antriebseinheit angebracht sein. Zwischen den gelenkig miteinander verbundenen Einheiten kann ein Vorspannelement angreifen, welches ein Vorspannmoment als Schwenkmoment in Drehrichtung des Gelenks ausübt, so dass die Spindeleinheit und die Antriebseinheit voneinander weg gedrückt werden. Vorteile der gelenkigen Führung sind, dass unter anderem ein einfacher, kompakter Aufbau und eine relativ geringe Reibung ermöglicht werden, wodurch ein zuverlässiger Betrieb gewährleistet ist.

Es ist möglich, dass das Gelenk federbelastet ist. Bevorzugt durch ein Federelement kann ein elastisches Vorspannmoment als Schwenkmoment auf das Gelenk ausgeübt werden. Das Vorspannmoment greift an dem Gelenk an, um die Antriebseinheit um die Gelenkachse von der Spindeleinheit weg zu schwenken, und dadurch die Vorspannung zu erzeugen. Das Federelement kann durch eine Biegefeder realisiert sein, die mit geringem Aufwand bereitgestellt und montiert werden kann.

In einer vorteilhaften Ausführung kann vorgesehen sein, dass das Gelenk ein elastisches Biegescharnier aufweist. Das Biegescharnier, auch als Filmscharnier bezeichnet, weist bevorzugt ein flexibel biegbares Scharnierelement auf, vorzugsweise ein biegeelastisches Federelement, das eine elastisch biegbare, federnde Verbindung zwischen Spindeleinheit und Antriebseinheit zur Verfügung stellt. Ein solches Biegescharnier kann beispielsweise eine Blattfeder aufweisen, beispielsweise ein Federstahlblatt. Diese ermöglicht die relative Bewegung und bildet dabei gleichzeitig ein biegeelastisches Federelement. Es wird beim Schwenken elastisch gespannt, und übt durch seine elastische Rückstellkraft die Vorspannkraft auf das Gelenk aus. Vorzugsweise kann das Federelement zwischen einem Spindelgehäuse der Spindeleinheit angebracht sein. Ein Biegescharmier kann vorteilhaft mit geringem Aufwand und Raumbedarf bereitgestellt werden, hat eine geringe und gleichbleibende Gelenkreibung und ist praktisch wartungsfrei.

Es ist möglich, dass der Riemen als Flachriemen, Keilriemen, Keilrippenriemen oder Zahnriemen ausgebildet ist. Ein Zahnriementrieb bietet als formschlüssiges Zugmittel eine besonders hohe Momentübertragung. Flach- oder Keilriementriebe können mit geringerem Aufwand realisiert werden, und ermöglichen durch die erfindungsgemäße Ausgestaltung ebenfalls eine hohe Betriebssicherheit.

Die Erfindung betrifft weiterhin eine motorisch verstellbare Lenksäule für ein Kraftfahrzeug, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, und von dem die Stelleinheit relativ zur Trageinheit verstellbar ist, bei der erfindungsgemäß vorgesehen ist, dass der Verstellantrieb ausgebildet ist gemäß einer der vorangehend beschriebenen Ausführungen oder Kombinationen davon.

Zur Realisierung einer Längsverstellung der Lenksäule in Richtung der Längsachse der Lenkspindel kann ein Verstellantrieb zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Gewindespindelachse im Wesentlichen parallel zur Längsachse ausgerichtet sein kann. Der Verstellantrieb kann zur Längsverstellung.zwischen in Längsrichtung teleskopartig relativ zueinander verstellbaren Mantelrohren der Stelleinheit angeordnet sein.

Zur Höhenverstellung kann ein Spindeltrieb zwischen der Trageinheit und einer daran höhenverstellbar gelagerten Stelleinheit oder einer Manteleinheit, in der die Stelleinheit aufgenommen ist, angeordnet sein.

An einer Lenksäule können eine motorische Längs- und Höhenverstellung einzeln oder in Kombination ausgebildet sein.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Darstellung einer erfindungsgemäßen motorisch verstellbaren Lenksäule,
- Figur 2: die Lenksäule gemäß Figur 1 in einer weiteren perspektivischen Ansicht,
- Figur 3: einen erfindungsgemäßen Verstellantrieb in einer ersten Ausführungsform in einer schematischen perspektivischen Ansicht,
- Figur 4: den Verstellantrieb gemäß Figur 3 in einer weiteren Ansicht,
- Figur 5: den Verstellantrieb gemäß Figur 3 oder 4 in einer weiteren Ansicht,
- Figur 6: einen erfindungsgemäßen Verstellantrieb in einer zweiten Ausführungsform in einer schematischen perspektivischen Ansicht,
- Figur 7: einen erfindungsgemäßen Verstellantrieb in einer dritten Ausführungsform in einer schematischen perspektivischen Ansicht.

### Ausführungsformen der Erfindung

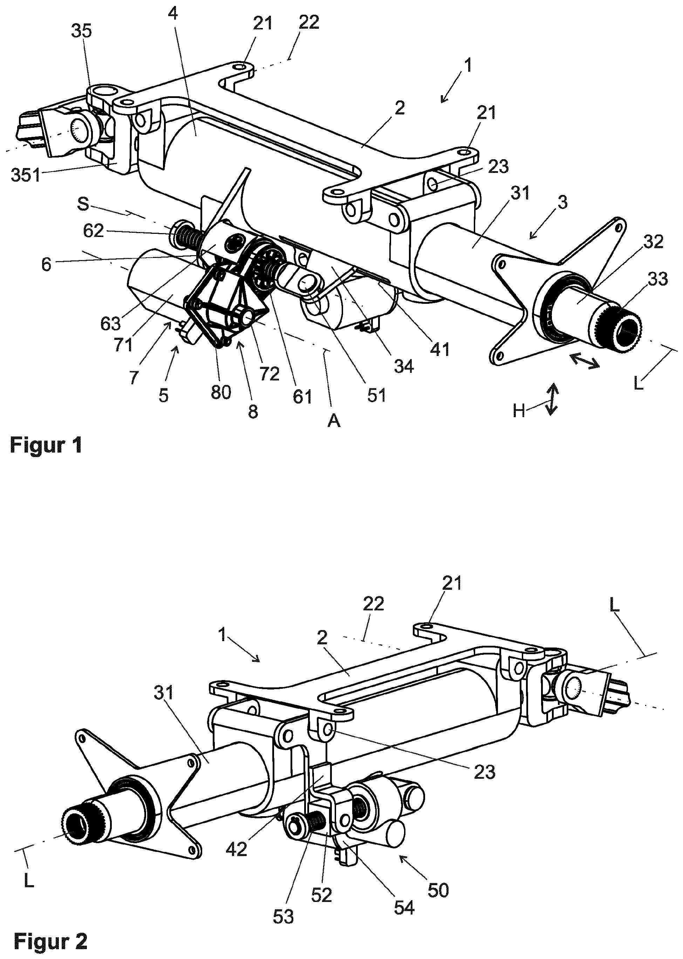

Figur 1 zeigt eine erfindungsgemäße Lenksäule 1 in einer schematischen perspektivischen Ansicht von oben schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt dieselbe Lenksäule 1 in einer Ansicht von schräg unten gesehen.

Die Lenksäule 1 umfasst eine Trageinheit 2, welche als Konsole ausgebildet ist, die Befestigungsmittel 21 in Form von Befestigungsbohrungen aufweist zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet - aufgenommen ist.

Die Stelleinheit 3 weist ein Mantelrohr 31 auf, in dem eine Lenkspindel 32 um eine Längsachse L drehbar gelagert ist, die sich axial in Längsrichtung erstreckt. Am hinteren Ende ist an der Lenkspindel 32 ein Befestigungsabschnitt 33 ausgebildet, an dem ein nicht dargestelltes Lenkrad anbringbar ist. Am vorderen Ende ist die Lenkspindel 32 mit einer Gabel 351 eines Universalgelenks 35 drehmomentschlüssig verbunden.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet ist.

Ein erster, erfindungsgemäß ausgestalteter Verstellantrieb 5 zur Längsverstellung der Stelleinheit 3 relativ zur Manteleinheit 4 in Richtung der Längsachse L weist eine Spindeleinheit 6 und eine Antriebseinheit 7 auf.

Die Spindeleinheit 6 umfasst einen Spindeltrieb und weist eine Spindelmutter 61 mit einem Innengewinde auf, in das eine sich längs einer Spindelachse S erstreckende Gewindespindel 62, auch kurz als Spindel 62 bezeichnet, eingreift, also mit ihrem Außengewinde in das korrespondierende Innengewinde der Spindelmutter 61 eingeschraubt ist. Die Spindelachse S verläuft im Wesentlichen parallel zur Längsachse L.

Die Spindelmutter 61 ist in einem Spindelgehäuse 63 um die Achse S drehbar gelagert, und dabei axial, in Richtung der Achse S, an dem Spindelgehäuse 63 abgestützt. Das Spindelgehäuse 63 ist mit der Manteleinheit 4 verbunden und axial abgestützt.

Die Gewindespindel 62 ist mit einem Befestigungselement 51, welches an ihrem antriebsfernen, hinteren Ende ausgebildet ist, über ein Übertragungselement 34 mit der Stelleinheit 3 verbunden, und zwar fest in axialer Richtung, also in Richtung der Spindelachse S bzw. der Längsachse L und feststehend bezüglich Drehung um die Achse S. Durch die drehend antreibbare Spindelmutter 61 und die bezüglich Drehung um die Achse S feststehende Gewindespindel 62 wird ein sogenannter Tauchspindelantrieb realisiert.

Das Übertragungselement 34 ragt von der Stelleinheit 3 durch eine schlitzförmige Durchgangsöffnung 41 in der Manteleinheit 4. Zur Verstellung der Lenksäule 1 in Längsrichtung kann das Übertragungselement 34 frei in der Durchgangsöffnung 41 in Längsrichtung entlangbewegt werden.

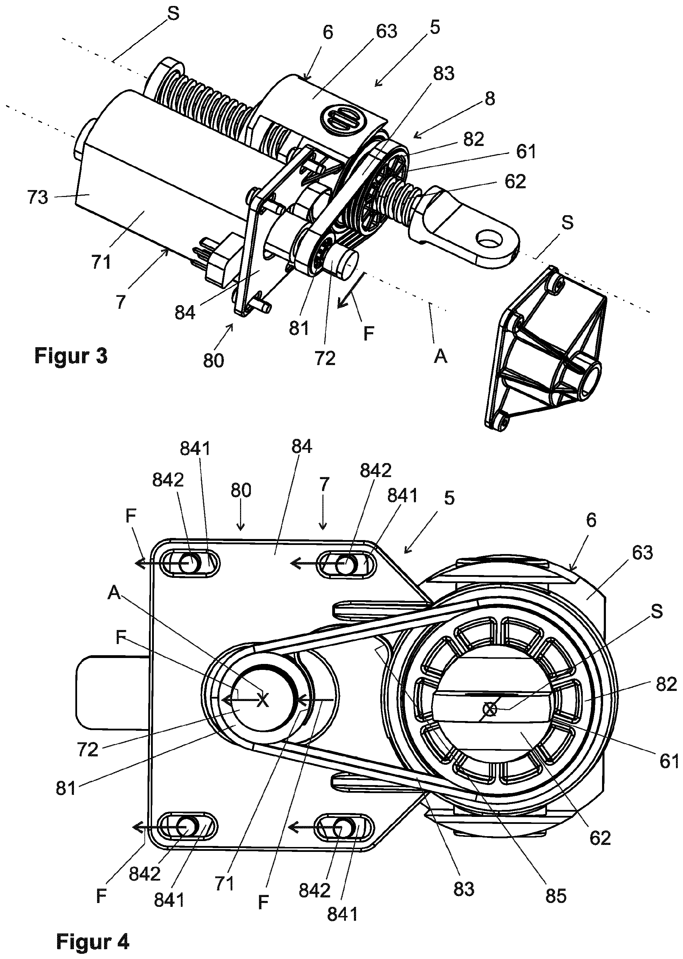

Die Antriebseinheit 7 weist einen elektrischen Motor 71 auf, der eine Motorwelle 72 hat, die sich entlang einer Antriebsachse A erstreckt. Über einen Riementrieb 8, der weiter unten anhand der Figuren 3 bis 7 näher erläutert wird, ist die Spindelmutter 61 von dem Motor 71 um die Spindelachse S drehend antreibbar ist. Dadurch kann - je nach Drehrichtung des Motors 71 - die Gewindespindel 52 in Richtung der Spindelachse S translatorisch relativ zur Spindelmutter 61 verlagert werden, so dass entsprechend die mit der Gewindespindel 62 verbundene Stelleinrichtung 3 relativ zu der mit der Spindelmutter 61 verbundenen Manteleinheit 4 in Richtung der Längsachse L verstellt wird. Der Antrieb der Spindelmutter 61 wird weiter unten noch detailliert erläutert.

In Figur 2 ist weiterhin erkennbar, wie ein zweiter Verstellantrieb 50 zur Verstellung in Höhenrichtung H an der Lenksäule 1 angebracht ist.

Die Manteleinheit 4 ist an der Trageinheit 2 um eine Höhenverstellachse 22 an der Trageinheit 2 in Höhenrichtung H verschwenkbar gelagert.

Der Höhen-Verstellantrieb 50 umfasst eine Spindelmutter 52, in deren Innengewinde eine Gewindespindel 53 eingreift. Die Gewindespindel 53 ist von einer Antriebseinheit 54 um ihre Achse drehend antreibbar.

Die Spindelmutter 52 ist bezüglich Drehung um ihre Achse feststehend an einem Ende eines zweiarmigen Stellhebels 42 angebracht, der um ein Schwenklager 23 drehbar an der Trageinheit 2 gelagert ist, und dessen anderer Arm mit dem anderen Ende mit der Manteleinheit 4 verbunden ist.

Durch Drehung der Gewindespindel 53 kann - je nach Drehrichtung des Antriebs - die Spindelmutter 52 axial translatorisch relativ zur Gewindespindel 53 verlagert werden, so dass entsprechend die über den Stellhebel 42 mit der Spindelmutter 52 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet.

Durch die drehend antreibbare Gewindespindel 53 und die bezüglich Drehung feststehende Spindelmutter 52 wird ein sogenannter Rotationsspindelantrieb, auch als Drehspindelantrieb bezeichnet, realisiert.

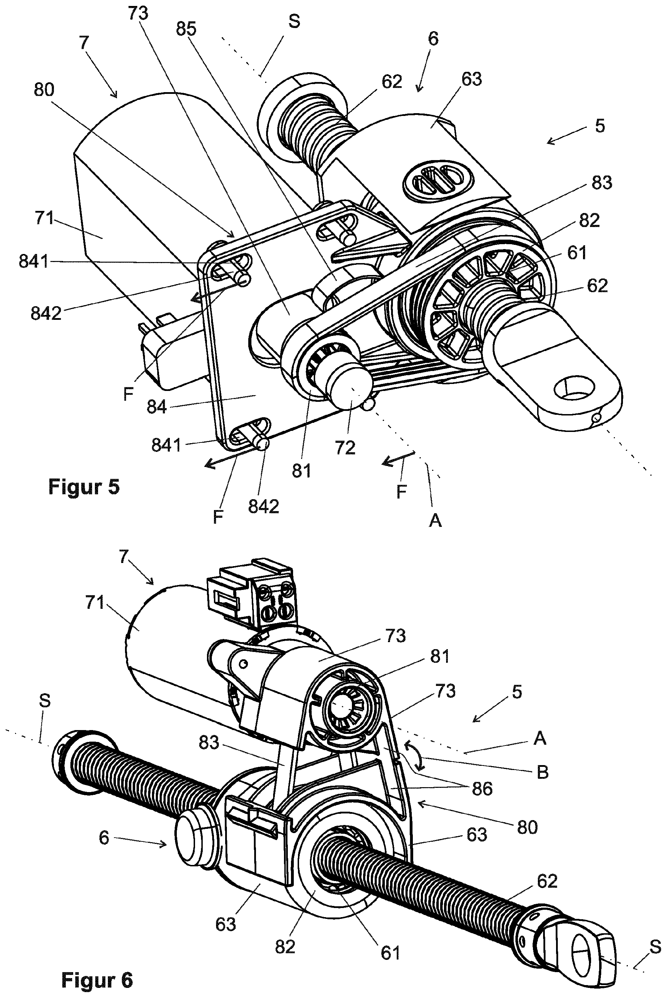

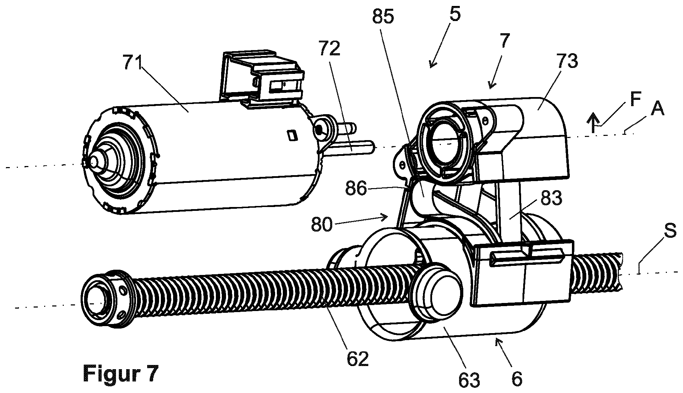

Die vorliegende Erfindung bezieht sich auf den Verstellantrieb 5. Dieser ist in einer ersten Ausführungsform im Detail in den Figuren 3 bis 5 dargestellt, und in einer zweiten Ausführung in Figur 6, und in einer dritten Ausführung in Figur 7, wobei für gleichwirkende Elemente dieselben Bezugszeichen verwendet werden. Der Höhen-Verstellantrieb 50 kann prinzipiell analog zum Verstellantrieb 5 aufgebaut sein.

Der Riementrieb 8 weist ein von dem Motor 71 drehend antreibbares Antriebsrad 81 auf, welches als Riemenrad ausgebildet ist und mit der Motorwelle 72 verbunden ist. Mit der Spindelmutter 61 ist ein Getrieberad 82 koaxial ausgebildet und drehfest verbunden, welches ebenfalls als Riemenrad ausgebildet ist. Ein Riemen 83 läuft als Zugmittel um das Antriebsrad 81 und das Getrieberad 82 um.

In der ersten Ausführung wird ein Antriebsgehäuse 73 durch das Motorgehäuse des Motors 71 gebildet. In dem Antriebsgehäuse 73 ist das Antriebsrad 81 um die Antriebsachse A drehend antreibbar gelagert.

Die Antriebseinheit 7 ist relativ zur Spindeleinheit 6 in einer Vorspannrichtung F verlagerbar, die in Figur 4 schematisch an der Antriebsachse A eingezeichnet ist. Die Vorspannrichtung F ist von der Spindelachse S aus senkrecht zur Antriebsachse A gerichtet, und ist vorzugsweise identisch mit einer Führungsrichtung einer Führungseinrichtung 80.

Die Führungseinrichtung 80 umfasst in der ersten Ausführung gemäß den Figuren 3 bis 5 eine lineare Schiebeführung. Diese weist eine Grundplatte 84 auf, die fest mit dem Spindelgehäuse 63 verbunden ist und sich flächenhaft senkrecht zur Antriebsachse A erstreckt. Der Motor 71 ist an der Grundplatte 84 gehalten, wobei die Motorwelle 72 durch diese hindurch ragt. Die Grundplatte 84 weist in der Verstellrichtung F langgestreckte Führungsschlitze 841 auf, in denen von dem Antriebsgehäuse 73 des Motors 71 axial, in Richtung der Antriebsachse A vorstehende Führungszapfen 842 in der Vorspannrichtung F gleitend geführt sind, wie mit den Pfeilen angedeutet ist. Dadurch kann die Antriebseinheit 7 von der Spindeleinheit 6 weg gerichtet quer zur Spindelachse S verschoben werden, wodurch der Abstand zwischen dem Antriebsrad 81 und dem Getrieberad 82 vergrößert wird.

Ein Vorspannelement in Form einer gebogenen Blattfeder 85 stützt sich elastisch vorgespannt in der Vorspannrichtung F gegen das Antriebsgehäuse 71 und das Spindelgehäuse 63 ab. Durch die Federkraft wird das Antriebsgehäuse 71 zusammen mit dem Antriebsrad 81 von dem Spindelgehäuse 63 weg gerichtet belastet, und in der Führungseinrichtung 80 geführt verschoben, wobei der Riemen 83 mit der durch die Spannung des Federelements 85 erzeugten Vorspannkraft gespannt wird. Auf diese Weise kann die Riemenspannung durch die Vorspannung des Federelements 85 vorgegeben werden. Dabei kann die Federkraft und damit die Riemenspannung im Betrieb praktisch konstant gehalten werden.

In der zweiten Ausführung gemäß Figur 6 ist der Motor 71 mit einem Antriebsgehäuse 73 verbunden, in dem das Antriebsrad 81 gelagert ist.

Anstelle der Schiebeführung gemäß der ersten Ausführung ist die Führungs- und Vorspanneinrichtung als Gelenkführung ausgebildet. Diese wird gebildet durch ein federelastisches Biegescharnier 86, welches bevorzugt wie im Beispiel gezeigt einen Federstahlstreifen aufweisen kann, der zwischen dem Antriebsgehäuse 73 und dem Spindelgehäuse 63 befestigt ist. Durch elastische Biegung des Biegescharniers 86 wird eine geführte Bogenbewegung B des Antriebsgehäuses 73 relativ zum Spindelgehäuse 63 um eine zur Spindelachse S parallele Scharnierachse ermöglicht, wie mit dem gebogenen Pfeil angedeutet ist. Dadurch sind das Antriebsgehäuse 73 und das Spindelgehäuse 63 relativ zueinander schwenkbar, wodurch der Abstand zwischen Antriebsachse A und Spindelachse S veränderbar ist. Das Biegescharnier ist aus zwei laschenartigen Abschnitten, die über einen biegeweichen Abschnitt miteinander verbunden sind, gebildet. Dabei kann das Biegescharnier 86 selbst bei seiner Biegeverformung eine elastische Vorspannkraft erzeugen, welche als Biege- oder Schwenkmoment wirkt und das Antriebsgehäuse 73 und das Spindelgehäuse 63 quer zur Spindelachse S federnd belastet und voneinander weg drängt. Entsprechend kann der Riemen durch die Federkraft des Biegescharniers 86 gespannt werden.

Die dritte Ausführung gemäß Figur 7 ist hinsichtlich der Ausgestaltung und Anordnung des Antriebsgehäuses 73 und des Spindelgehäuses 63 ähnlich wie die vorangehende Ausführung ausgestaltet. Ein Unterschied besteht darin, dass zusätzlich oder alternativ zu dem darin gezeigten Biegescharnier 86 ein Federelement 85 vorgesehen sein kann, welches wie in der ersten Ausführung das Antriebsgehäuse 73 und das Spindelgehäuse 63 durch Federkraft voneinander weg drängt, und dadurch die Riemenspannung des Riemens 83 erzeugt. Dabei kann ein Biegescharnier 86 ähnlich wie in Figur 6 eingesetzt sein, oder auch ein anderes, konventionelles Scharnier mit einem gelenkigen Bolzen zwischen den laschenartigen Abschnitten, welches jedoch keine oder nur einen Teil der Vorspannkraft erzeugt, die dann durch das zusätzliche Federelement 85 bereitgestellt werden kann.

### Bezugszeichenliste

- 1: Lenksäule
- 2: Trageinheit
- 21: Befestigungsmittel
- 22: Höhenverstellachse
- 23: Schwenklager
- 3: Stelleinheit
- 31: Mantelrohr
- 32: Lenkspindel
- 33: Befestigungsabschnitt
- 34: Übertragungselement
- 35: Universalgelenk
- 4: Manteleinheit
- 41: Durchgangsöffnung
- 42: Stellhebel
- 5, 50: Verstellantrieb
- 51: Befestigungselement
- 52: Spindelmutter
- 53, 62: Gewindespindel
- 54: Antriebseinheit
- 56, 66: Motorwelle
- 6: Spindeleinheit
- 61: Spindelmutter
- 62: Gewindespindel
- 63: Spindelgehäuse
- 7: Antriebseinheit
- 71: Motor
- 72: Motorwelle
- 73: Antriebsgehäuse
- 8: Riementrieb
- 80: Führungseinrichtung
- 81: Antriebsrad
- 82: Getrieberad
- 83: Zahnriemen
- 84: Grundplatte
- 841: Führungsschlitz
- 842: Führungszapfen
- 85: Federelement
- 86: Biegescharnier
- L: Längsachse
- A: Antriebsachse
- S: Spindelachse
- H: Höhenrichtung
- F: Vorspannrichtung

## Patentansprüche

1. Verstellantrieb (5) für eine motorisch verstellbare Lenksäule (1) für ein Kraftfahrzeug, umfassend eine Spindeleinheit (6) mit einer in eine Spindelmutter (61) eingreifenden Gewindespindel (62) mit einer Spindelachse (S), und eine Antriebseinheit (7) mit einem von einem elektrischen Motor (71) um eine Antriebsachse (A) drehend antreibbaren Antriebsrad (81), welches als Riemenrad ausgebildet ist, wobei ein mit dem Antriebsrad (81) über einen umlaufenden Riemen (83) antriebsmäßig gekuppeltes Getrieberad (82) mit der Spindelmutter (61) oder der Gewindespindel (62) verbunden ist, wobei zwischen der Antriebseinheit (7) und der Spindeleinheit (6) eine Vorspanneinrichtung angeordnet ist,
**dadurch gekennzeichnet,**
**dass** die Antriebseinheit (7) relativ zur Spindeleinheit (6) in einer Führungseinrichtung (80) bewegbar gelagert ist.

2. Verstellantrieb nach Anspruch 1, **dadurch gekennzeichnet, dass** die Vorspanneinrichtung ausgebildet ist, um die Antriebseinheit (7) mit einer Vorspannkraft von der Spindeleinheit (6) weg zu drängen.

3. Verstellantrieb nach einem der vorangehenden Ansprüche, **dadurch gekennzeichnet, dass** die Spindeleinheit (6) ein Spindelgehäuse (63) aufweist, in dem das Getrieberad (82) drehbar gelagert ist, und die Antriebseinheit (7) ein Antriebsgehäuse (73) aufweist, in dem das Antriebsrad (81) drehbar gelagert ist.

4. Verstellantrieb nach einem der vorangehenden Ansprüche, **dadurch gekennzeichnet, dass** die Vorspanneinrichtung ein zwischen der Antriebseinheit (7) und der Spindeleinheit (6) wirkungsmäßig angeordnetes Vorspannelement (85, 86) aufweist.

5. Verstellantrieb nach einem der vorangehenden Ansprüche, **dadurch gekennzeichnet, dass** die Vorspanneinrichtung ein Federelement (85, 86) aufweist.

6. Verstellantrieb nach einem der vorangehenden Ansprüche, **dadurch gekennzeichnet, dass** die Führungseinrichtung (80) eine Schiebeführung (84, 841, 842) aufweist.

7. Verstellantrieb nach einem der vorangehenden Ansprüche, **dadurch gekennzeichnet, dass** die Führungseinrichtung (80) ein Gelenk aufweist.

8. Verstellantrieb nach einem der vorangehenden Ansprüche, **dadurch gekennzeichnet, dass** das Gelenk federbelastet ist.

9. Verstellantrieb nach Anspruch 8, **dadurch gekennzeichnet, dass** das Gelenk ein elastisches Biegescharnier (86) aufweist.

10. Verstellantrieb nach einem der vorangehenden Ansprüche, **dadurch gekennzeichnet, dass** der Riemen (83) als Flachriemen, Keilriemen, Keilrippenriemen oder Zahnriemen ausgebildet ist.

11. Motorisch verstellbare Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (32) um eine Längsachse (L) drehbar gelagert ist, und mit einem Verstellantrieb (5), der mit der Trageinheit (2) und mit der Stelleinheit (3) verbunden ist, und von dem die Stelleinheit (3) relativ zur Trageinheit (2) verstellbar ist,
**dadurch gekennzeichnet,**
**dass** der Verstellantrieb (5) ausgebildet ist gemäß zumindest einem der vorangehenden Ansprüche 1 bis 10.

12. Lenksäule nach Anspruch 11, **dadurch gekennzeichnet, dass** der Verstellantrieb (5) zur Längsverstellung zwischen in Längsrichtung teleskoartig relativ zueinander verstellbaren Mantelrohren (31, 4) angeordnet ist.

13. Lenksäule nach einem der Ansprüche 11 bis 12, **dadurch gekennzeichnet, dass** der Verstellantrieb (5) zur Höhenverstellung quer zur Längsachse (L) zwischen der Stelleinheit (3) und der Trageinheit (2) angeordnet ist.

## Claims

1. Adjustment drive (5) for a motor-adjustable steering column (1) for a motor vehicle, comprising a spindle unit (6) with a threaded spindle (62) engaging in a spindle nut (61) and having a spindle axis (S), and a drive unit (7) with a drive wheel (81) which can be driven in rotation about a drive axis (A) by an electric motor (71), which is designed as a belt wheel, wherein a gear wheel (82) coupled to the drive wheel (81) in a driving manner via a circulating belt (83) is connected to the spindle nut (61) or the threaded spindle (62), wherein a pretensioning device is arranged between the drive unit (7) and the spindle unit (6),
**characterized in**
**in that** the drive unit (7) is mounted so as to be movable relative to the spindle unit (6) in a guide device (80).

2. Adjustment drive according to claim 1, **characterized in that** the pretensioning device is designed to urge the drive unit (7) away from the spindle unit (6) with a pretensioning force.

3. Adjustment drive according to one of the preceding claims, **characterized in that** the spindle unit (6) has a spindle housing (63) in which the gear wheel (82) is rotatably mounted, and the drive unit (7) has a drive housing (73) in which the drive wheel (81) is rotatably mounted.

4. Adjustment drive according to one of the preceding claims, **characterized in that** the pretensioning device has a pretensioning element (85, 86) effectively arranged between the drive unit (7) and the spindle unit (6).

5. Adjustment drive according to one of the preceding claims, **characterized in that** the pretensioning device has a spring element (85, 86).

6. Adjustment drive according to one of the preceding claims, **characterized in that** the guide device (80) has a sliding guide (84, 841, 842).

7. Adjustment drive according to one of the preceding claims, **characterized in that** the guide device (80) has a joint.

8. Adjustment drive according to one of the preceding claims, **characterized in that** the joint is spring-loaded.

9. Adjustment drive according to claim 8, **characterized in that** the joint has an elastic bending hinge (86).

10. Adjustment drive according to one of the preceding claims, **characterized in that** the belt (83) is designed as a flat belt, V-belt, V-ribbed belt or toothed belt.

11. Motor-adjustable steering column (1) for a motor vehicle, having a support unit (2), which can be attached to a vehicle body, and by which a positioning unit (3) is held, in which a steering spindle (32) is mounted rotatably about a longitudinal axis (L), and having an adjustment drive (5), which is connected to the support unit (2) and to the positioning unit (3), and by which the positioning unit (3) can be adjusted relative to the support unit (2),
**characterized in**
**in that** the adjustment drive (5) is designed in accordance with at least one of the preceding claims 1 to 10.

12. Steering column according to claim 11, **characterized in that** the adjustment drive (5) for longitudinal adjustment is arranged between casing tubes (31, 4) which are telescopically adjustable relative to one another in the longitudinal direction.

13. Steering column according to one of claims 11 to 12, **characterized in that** the adjustment drive (5) for height adjustment transversely to the longitudinal axis (L) is arranged between the adjusting unit (3) and the support unit (2).

## Revendications

1. Entraînement de réglage (5) pour une colonne de direction (1) réglable par moteur pour un véhicule automobile, comprenant une unité de broche (6) avec une broche filetée (62) s'engageant dans un écrou de broche (61) avec un axe de broche (S), et une unité d'entraînement (7) avec une roue d'entraînement (81) pouvant être entraînée en rotation autour d'un axe d'entraînement (A) par un moteur électrique (71), qui est réalisée sous forme de roue à courroie, une roue d'engrenage (82) couplée en entraînement à la roue d'entraînement (81) par l'intermédiaire d'une courroie périphérique (83) étant reliée à l'écrou de broche (61) ou à la broche filetée (62), un dispositif de précontrainte étant disposé entre l'unité d'entraînement (7) et l'unité de broche (6),
**caractérisé en ce que**
**en ce que** l'unité d'entraînement (7) est montée mobile par rapport à l'unité de broche (6) dans un dispositif de guidage (80).

2. Entraînement de réglage selon la revendication 1, **caractérisé en ce que** le dispositif de précontrainte est conçu pour éloigner l'unité d'entraînement (7) de l'unité de broche (6) avec une force de précontrainte.

3. Entraînement de réglage selon l'une des revendications précédentes, **caractérisé en ce que** l'unité de broche (6) présente un carter de broche (63) dans lequel la roue d'engrenage (82) est logée de manière rotative, et l'unité d'entraînement (7) présente un carter d'entraînement (73) dans lequel la roue d'entraînement (81) est logée de manière rotative.

4. Entraînement de réglage selon l'une des revendications précédentes, **caractérisé en ce que** le dispositif de précontrainte présente un élément de précontrainte (85, 86) disposé de manière fonctionnelle entre l'unité d'entraînement (7) et l'unité de broche (6).

5. Entraînement de réglage selon l'une des revendications précédentes, **caractérisé en ce que** le dispositif de précontrainte présente un élément de ressort (85, 86).

6. Entraînement de réglage selon l'une des revendications précédentes, **caractérisé en ce que** le dispositif de guidage (80) présente un guide coulissant (84, 841, 842).

7. Entraînement de réglage selon l'une des revendications précédentes, **caractérisé en ce que** le dispositif de guidage (80) présente une articulation.

8. Entraînement de réglage selon l'une des revendications précédentes, **caractérisé en ce que** l'articulation est sollicitée par un ressort.

9. Entraînement de réglage selon la revendication 8, **caractérisé en ce que** l'articulation présente une charnière de flexion élastique (86).

10. Entraînement de réglage selon l'une des revendications précédentes, **caractérisé en ce que** la courroie (83) est conçue comme une courroie plate, une courroie trapézoïdale, une courroie trapézoïdale à nervures ou une courroie dentée.

11. Colonne de direction (1) réglable par moteur pour un véhicule automobile, comprenant une unité de support (2) qui peut être montée sur une carrosserie de véhicule et par laquelle est maintenue une unité de réglage (3) dans laquelle un arbre de direction (32) est monté à rotation autour d'un axe longitudinal (L), et comprenant un entraînement de réglage (5) qui est relié à l'unité de support (2) et à l'unité de réglage (3) et par lequel l'unité de réglage (3) peut être réglée par rapport à l'unité de support (2),
**caractérisé en ce que**
**en ce que** l'entraînement de réglage (5) est réalisé selon au moins l'une des revendications 1 à 10 précédentes.

12. Colonne de direction selon la revendication 11, **caractérisée en ce que** l'entraînement de réglage (5) est disposé pour le réglage longitudinal entre des tubes d'enveloppe (31, 4) réglables l'un par rapport à l'autre de manière télescopique dans la direction longitudinale.

13. Colonne de direction selon l'une des revendications 11 à 12, **caractérisée en ce que** l'entraînement de réglage (5) pour le réglage en hauteur est disposé transversalement à l'axe longitudinal (L) entre l'unité de réglage (3) et l'unité de support (2).
